**Europäisches Patentamt**

**European Patent Office**

**Office européen des brevets**

(19)

(11) Veröffentlichungsnummer : **0 093 860**
**B1**

(12)

# EUROPÄISCHE PATENTSCHRIFT

(45) Veröffentlichungstag der Patentschrift :
**10.09.86**

(21) Anmeldenummer : **83102692.7**

(22) Anmeldetag : **18.03.83**

(51) Int. Cl.⁴ : **B 65 G  15/36,** B 65 G  15/38,
B 65 G  15/56, B 65 G  15/46,
B 65 G  23/04

(54) **Band für Verpackungsmaschinen.**

(30) Priorität : **12.05.82 DE 8213758 U**

(43) Veröffentlichungstag der Anmeldung :
**16.11.83 Patentblatt 83/46**

(45) Bekanntmachung des Hinweises auf die Patenterteilung : **10.09.86 Patentblatt 86/37**

(84) Benannte Vertragsstaaten :
**AT BE DE NL SE**

(56) Entgegenhaltungen :
**DE-A- 2 020 400**
**FR-A- 2 269 417**
**FR-A- 2 330 530**
**GB-A-     3 656**
**GB-A- 2 003 577**

(73) Patentinhaber : **von der Brüggen GmbH & Co KG**
**Delmenhorster Strasse 20**
**D-5000 Köln 60 (DE)**

(72) Erfinder : **Baron von der Brüggen, Erich Philipp**
**Osterather Strasse 7**
**D-5000 Köln 60 (DE)**
Erfinder : **Langer, Wolfgang Johann**
**Osterather Strasse 7**
**D-5000 Köln 60 (DE)**

(74) Vertreter : **Happe, Otto, Dipl.-Ing.**
**Isselburger Strasse 12**
**D-5000 Köln 60 (DE)**

Jouve, 18, rue St-Denis, 75001 Paris, France

**Beschreibung**

Die Erfindung betrifft eine aus PTFE-beschichtetem Glasfasergewebe, Nylongewebe o. dgl. bestehendes endloses Band für Verpackungsmaschinen, das an seinem oberen mit einem Streifen verstärkten Rand mit Führungsstiften, Führungsnoppen o. dgl. versehen ist, die in eine Nut der das Band antreibenden Rolle und in Nuten von Umlenkrollen eingreifen, wobei das Band in der Weise endlos gemacht ist, daß die sich überlappenden Bandenden miteinander verschweißt sind. Ein derartiges Band kann in beliebiger Folienstärke hergestellt sein. Es ist erheblichen dynamischen und thermischen Belastungen ausgesetzt.

Die bekannten, im Handel erhältlichen Bänder der vorgenannten Art weisen erhebliche Nachteile auf. Beispielsweise reißen die Bänder infolge der dynamischen und thermischen Belastung schon nach kurzer Betriebsdauer an der Unterkante ein. Es kommt auch vor, daß die in dem oberen mit einem Streifen verstärkten Rand des Bandes eingesetzten Führungsstifte, Führungsnoppen o. dgl. ausreißen, weil der im allgemeinen aus dem gleichen Werkstoff wie das Band bestehende Streifen für die auftretenden Beanspruchungen unzureichend ist. Die Folge eines ausgerissenen Führungsstiftes, Führungsnoppens o. dgl. ist häufig ein Einreißen der oberen Bandkante. Da nach dem Einreißen des Bandes an seiner Unter- oder Oberkante die auf das Band von der antreibenden Rolle aufgebrachte Zugkraft nicht mehr über die gesamte Breite des Bandes übertragen wird, läuft das Band nicht mehr gerade, so daß es schließlich zur Zerstörung des Bandes kommt. Durch den dadurch bedingten Ausfall der betreffenden Verpackungsmaschine entsteht ein erheblicher Schaden.

Der Erfindung liegt die Aufgabe zugrunde, das Ein- bzw. Weiterreißen des Bandes zumindest soweit zu verringern, daß ein Geradlauf des Bandes gewährleistet ist.

Die Lösung der gestellten Aufgabe besteht darin, daß bei einem Band der eingangs genannten Art in das Band mindestens ein sich über die gesamte Länge des Bandes erstreckender temperaturbeständiger und hochzugfester Faden eingenäht ist, wobei die Temperaturbeständigkeit und die Zugfestigkeit des Fadens mindestens so groß sein müssen, wie die des Bandes. Die Fäden können geradlinig genäht sein ; sie können aber auch anders verlaufen, beispielsweise in einer Wellen- oder Zickzacklinie.

Es ist zwar bereits bekannt, Bänder, und zwar Transportbänder, mit Schnüren aus im wesentlichen undehnbarem Material zu versehen (DE-A-2 020 400) und in Schläuchen Metallfäden einzunähen (FR-A-2 269 417). Die Schnüre und die Metallfäden dienen aber einem völlig anderen Zweck als die Fäden des erfindungsgemäßen Bandes ; die Schnüre dienen dazu, eine unerwünscht große Dehnung des Transportbandes zu verhindern, während die Metallfäden die Ränder eines wendelförmig gewundenen Streifens zu einem Schlauch verbinden. Darüber hinaus ist weder ein Transportband noch ein Schlauch mit einem Band für Verpackungsmaschinen vergleichbar.

Für mehrere Anwendungsfälle des erfindungsgemäßen Bandes dürfte es ausreichen, nur etwa in der Mitte des Bandes einen Faden oder mehrere Fäden einzunähen, um eine völlige Zerstörung des Bandes zu verhindern. Zweckmäßigerweise sind jedoch die in das Band eingenähten Fäden mit etwa gleichem Abstand voneinander über die Breite des Bandes verteilt angeordnet.

Um zu gewährleisten, daß ein an der oberen oder unteren Kante des Bandes auftretender Riß eine bestimmte Länge nicht überschreitet, ist mindestens je ein Faden in der Nähe der oberen und der unteren Bandkante angeordnet, wobei vorzugsweise in der Nähe der oberen Bandkante zwei Fäden angeordnet sind, die die Führungsstifte, Führungsnoppen o. dgl. zwischen sich einschließen, während an der unteren Bandkante nur ein Faden angeordnet ist.

Bei Verwendung eines ausreichend starken Streifens zur Verstärkung des oberen Bandrandes ist in Weiterbildung der Erfindung nur in der Nähe der unteren Bandkante mindestens ein Faden angeordnet. Durch diese Ausbildung des Bandes ist dessen Geradlauf selbst dann noch gewährleistet, wenn das Band durch Verschleiß oder mechanische Verletzungen beschädigt ist, da der den oberen Rand des Bandes verstärkende Streifen und der in der Nähe der unteren Bandkante eingenähte Faden die auftretende Zugkraft gleichmäßig übertragen. Das Band selbst ist an der Zugkraftübertragung nicht oder nur in sehr geringem Maße beteiligt.

Um einerseits sicherzustellen, daß der in der Nähe der unteren Bandkante eingenähte Faden auch bei einer Beschädigung des unteren Bandrandes in dem Band noch einen ausreichenden Halt hat, und andererseits zu verhindern, daß ein am unteren Rand des Bandes auftretender Riß sich zu tief in das Band hinein fortbildet, weist in Weiterbildung der Erfindung der in der Nähe der unteren Bandkante eingenähte Faden von der unteren Bandkante einen Abstand von mindestens 2 mm und nicht mehr als 6 mm auf.

Damit durch das Einnähen der Fädens in das Band keine zu starke Perforierung des Bandes eintritt, aber dennoch die durch die Fäden gebildeten Nähte genügend stark sind, um ein Weiterreißen des Bandes zu verhindern, beträgt nach einem anderen Merkmal der Erfindung die Stichlänge der in das Band eingenähten Fäden zwischen 2 und 6 mm.

Durch das Einnähen weiterer Fäden in das Band im Bereich der sich überlappenden Bandenden, die in Längsrichtung des Bandes verlaufen und mindestens um ein Maß von 10 mm über jedes Bandende hinausragen, wird zusätzlich ein Öffnen der Verbindungsstelle oder ein Einreißen des Bandes links und rechts parallel zur Schweißnaht des Bandes verhindert, und zwar selbst dann, wenn sich die Schweißung der sich überlappenden Bandenden lösen sollte.

Der Abstand der in das Band eingenähten weiteren Fäden beträgt zweckmäßigerweise etwa 20 mm.

Die Erfindung kann noch dadurch verbessert werden, daß die in das Band eingenähten Fäden aus Aramid, HT-1 Nylon o. dgl. gebildet sind.

Eine besonders haltbare Verbindungsstelle des Bandes ergibt sich erfindungsgemäß dadurch, daß die Breite der sich überlappenden Bandenden mindestens 30 mm beträgt.

In der Zeichnung sind mehrere Ausführungsbeispiele des erfindungsgemäßen Bandes dargestellt. Es zeigen :

Figur 1 einen Ausschnitt aus einem Band in Vorderansicht,

Figur 2 das Band gemäß Fig. 1 in Seitenansicht,

Figur 3 einen Ausschnitt aus einem anderen Band in Vorderansicht,

Figur 4 den rechten Abschnitt eines weiteren Bandes mit der antreibenden Rolle in Vorderansicht.

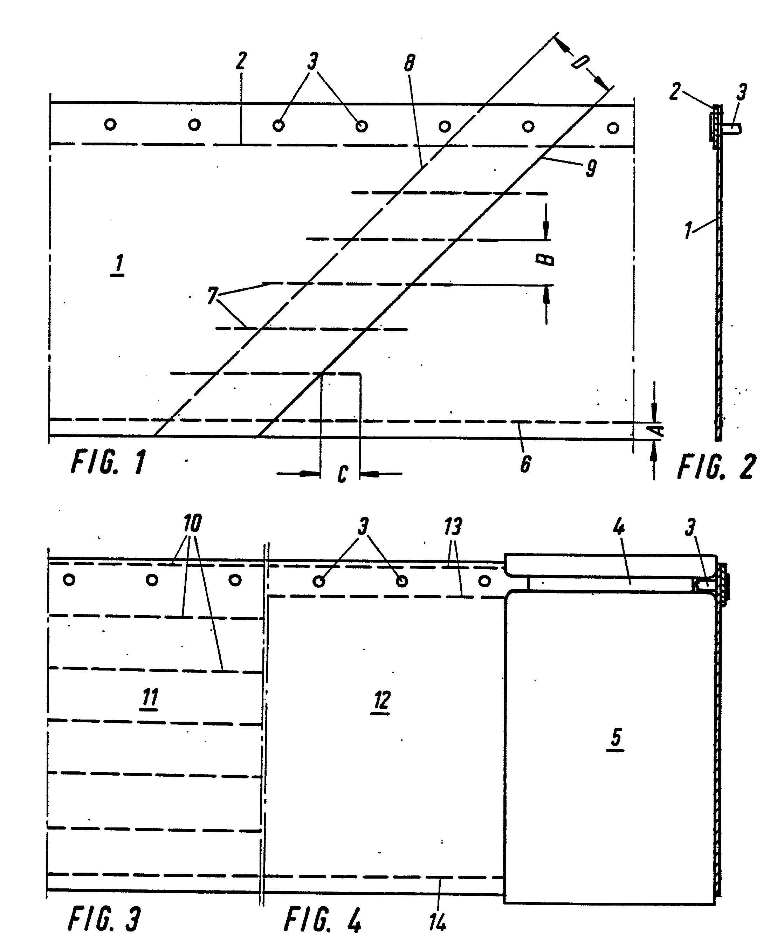

Das in den Fig. 1 und 2 dargestellte Band 1 ist an seinem oberen Rand mit einem Streifen 2 verstärkt. In den durch den Streifen 2 verstärkten Rand des Bandes 1 sind Führungsnoppen 3 eingesetzt, die in eine Nut 4 der das Band 1 antreibenden Rolle 5 (vgl. Fig. 4) eingreifen. In den unteren Rand des Bandes 1 ist in einem Abstand A von der Bandkante ein Faden 6 eingenäht. Weitere Fäden 7 sind im Bereich der sich überlappenden Bandenden 8 und 9 eingenäht. Die Fäden 7 haben einen Abstand B voneinander und ragen um das Maß C über jedes Bandende 8, 9 hinaus. Die Bandenden 8, 9 überlappen sich in einer Breite D und sind miteinander verschweißt.

Bei dem Ausführungsbeispiel gemäß Fig. 3 sind mehrere Fäden 10 über die Breite des Bandes 11 verteilt angeordnet.

In Fig. 4 ist ein Band 12 dargestellt, bei dem in der Nähe der oberen Bandkante zwei Fäden 13 und in der Nähe der unteren Bandkante ein Faden 14 angeordnet sind.

## Patentansprüche

1. Aus PTFE-beschichtetem Glasfasergewebe, Nylongewebe o. dgl. bestehendes endloses Band (1, 11, 12) für Verpackungsmaschinen, das an seinem oberen mit einem Streifen (2) verstärkten Rand mit Führungsstiften, Führungsnoppen (3) o. dgl. versehen ist, die in eine Nut (4) der das Band (1, 11, 12) antreibenden senkrecht stehenden Roll (5) und in Nuten von Umlenkrollen eingreifen, wobei das Band (1, 11, 12) in der Weise endlos gemacht ist, daß die sich über eine bestimmte Breite (D) überlappenden Bandenden miteinander verschweißt sind, dadurch gekennzeichnet, daß in das Band (1, 11, 12) mindestens ein sich über die gesamte Länge des Bandes (1, 11, 12) erstreckender temperaturbeständiger und hochzugfester Faden (6, 10, 13, 14) eingenäht ist.

2. Band nach Anspruch 1, dadurch gekennzeichnet, daß die in das Band (1) eingenähten Fäden (10) mit etwa gleichem Abstand voneinander über die Breite des Bandes (11) verteilt angeordnet sind.

3. Band nach Anspruch 1, dadurch gekennzeichnet, daß mindestens je ein Faden (6, 13, 14) in der Nähe der oberen und der unteren Bandkante angeornet ist.

4. Band nach Anspruch 3, dadurch gekennzeichnet, daß in der Nähe der oberen Bandkante zwei Fäden (13) angeordnet sind, die die Führungsstifte, Führungsnoppen (3) o. dgl. zwischen sich einschließen, und daß an der unteren Bandkante nur ein Faden (14) angeordnet ist.

5. Band nach Anspruch 1, dadurch gekennzeichnet, daß nur in der Nähe der unteren Bandkante mindestens ein Faden (6) angeordnet ist.

6. Band nach Anspruch 3, 4 oder 5, dadurch gekennzeichnet, daß die Fäden (6, 14) von der unteren Bandkante einen Abstand (A) von mindestens 2 mm aufweisen.

7. Band nach Anspruch 6, dadurch gekennzeichnet, daß der Abstand (A) der Fäden (6, 14) von der unteren Bandkante nicht mehr als 6 mm beträgt.

8. Band nach einem der Ansprüche 1 bis 7, dadurch gekennzeichnet, daß die Stichlänge der Fäden (6, 10, 13, 14) zwischen 2 und 6 mm beträgt.

9. Band nach einem der Ansprüche 1 bis 8, dadurch gekennzeichnet, daß im Bereich der sich überlappenden Bandenden (8, 9) weitere Fäden (7) eingenäht sind, die in Längsrichtung des Bandes (1) verlaufen und mindestens um ein Maß (C) von 10 mm über jedes Bandende (8, 9) hinausragen.

10. Band nach Anspruch 9, dadurch gekennzeichnet, daß der Abstand (B) der in das Band (1) eingenähten weiteren Fäden (7) etwa 20 mm beträgt.

11. Band nach einem der Ansprüche 1 bis 10, dadurch gekennzeichnet, daß die in das Band (1) eingenähten Fäden (6, 7, 10, 13, 14) aus Aramid, HT-1 Nylon o. dgl. gebildet sind.

12. Band nach einem der Ansprüche 9 bis 11, dadurch gekennzeichnet, daß die Breite (D) der sich überlappenden Bandenden (8, 9) mindestens 30 mm beträgt.

## Claims

1. An endless conveyor belt (1, 11, 12) for packaging machines consisting of PTFE-coated glass fiber fabric, nylon fabric or similar materials, being provided on its upper edge, which is strengthened with a strip (2), with pilot pins, guide nubs (3) or similar, interlocking into a groove (4) of the vertically positioned roll (5) driving the belt (1, 11, 12) and into nubs of deflection rolls, while the belt (1, 11, 12) has become endless in such a way, that the belt ends, which are overlapping to a certain width (D), have been welded with each other, characterized in that a temperature resistant and high tensile fiber (6, 10, 13, 14), which covers at least the whole length of the belt (1, 11, 12) has been sewed into the belt (1, 11, 12).

2. Belt according to claim 1, characterized in that the fibers (10) being sewed in to the belt (1) are arranged over the whole width of the belt (11) in about the same distance from each other.

3. Belt according to claim 1, characterized in that at least one fiber (6, 13, 14) has been arranged near the upper and one near the lower belt edge.

4. Belt according to claim 3, characterized in that two fibers (13) are arranged near the upper belt edge, which enclose the guide pins, guide nubs (3) or similar, and that at the lower belt edge only one fiber (14) has been arranged.

5. Belt according to claim 1, characterized in that only near the lower belt edge at least one fiber (6) has been arranged.

6. Belt according to claim 3, 4 or 5, characterized in that the fibers (6, 14) are arranged in a distance (A) of at least 2 mm from the lower belt edge.

7. Belt according to claim 6, characterized in that the distance (A) of the fibers (6, 14) from the lower belt edge does not exceed 6 mm.

8. Belt according to one of the claims 1 to 7, characterized in that the stitch length of the fibers (6, 10, 13, 14) is between 2 and 6 mm.

9. Belt according to one of the claims 1 to 8, characterized in that in the area of the overlapping belt ends (8, 9) additional fibers (7) have been sewed in, which run in the longitudinal direction of the belt (1) and which jut out at an extent (C) of a least 10 mm over each belt end (8, 9).

10. Belt according to claim 9, characterized in that the distance (B) of the fibers (7) additionally sewed into the belt (1) is about 20 mm.

11. Belt according to one of the claims 1 to 10, characterized in that the fibers (6, 7, 10, 13, 14) sewed into the belt are made of Aramid, HT-1 nylon or similar material.

12. Belt according to one of the claims 9 to 11, characterized in that the width (D) of the overlapping belt ends (8, 9) is at least 30 mm.


**Revendications**

1. Bande sans fin pour une machine d'emballage (1, 11, 12) composée d'un tissu de fils de verre avec un revêtement en PTFE, d'un tissu de nylon ou d'un matériau similaire équipée de goupilles de guidage, de boutons de guidage (3) ou de dispositifs similaires à son bord supérieur renforcée d'un ruban, ces goupilles ou boutons s'engrenant dans une rainure (4) du rouleau (5) vertical entraînant la bande (1, 11, 12) et s'engrenant dans des rainures des rouleaux de guidage de la bande (1, 11, 12) devenant sans fin de telle façon que les fins de bande recouvrantes à une certaine largeur (D) soient soudées l'une à l'autre, caractérisée en ce qu'un fil (6, 10, 13, 14) à constance thermique et hautement résistant à la traction qui s'étend à toute la longueur de la bande (1, 11, 12) est cousue dans la bande (1, 11, 12).

2. Bande selon la revendication 1, caractérisée en ce que les fils (10) cousus dans la bande (1) sont, l'un par rapport à l'autre, disposés approximativement à la même distance sur toute la largeur de la bande.

3. Bande selon la revendication 1, caractérisée en ce qu'au moins un fil (6, 13, 14) est disposé à l'approximité du bord supérieur et du bord inférieur de la bande.

4. Bande selon la revendication 3, caractérisée en ce que deux fils (13) sont disposés à l'approximité du bord supérieur de la bande enfermant les goupilles de guidage, les boutons de guidage (3) ou d'autres dispositifs similaires et en ce qu'un seul fil (14) et disposé au bord inférieur de la bande.

5. Bande selon la revendication 1, caractérisée en ce qu'au moins un fil (6) est disposé seulement à l'approximité du bord inférieur de la bande.

6. Bande selon une des revendications 3, 4 ou 5, caractérisée en ce que les fils (6, 14) sont disposés à une distance (A) d'au moins 2 mm du bord inférieur de la bande.

7. Bande selon la revendication 6, caractérisée en ce que la distance (A) des fils (6, 14) du bord inférieur de la bande n'est pas plus de 6 mm.

8. Bande selon une des revendications 1 à 7, caractérisée en ce que le point des fils (6, 10, 13, 14) est de 2 à 6 mm.

9. Bande selon une des revendications 1 à 8, caractérisée en ce que dans le domaine des fins de bande (8, 9) recouvrantes, d'autres fils (7) sont cousus dans la bande ces fils s'étendant en direction longitudinale de la bande (1) et dépassant chaque fin de bande (8, 9) d'une longueur (C) d'au moins 10 mm.

10. Bande selon la revendication 9, caractérisée en ce que la distance (B) des autres fils (7) cousus dans la bande (1) s'élève approximativement à 20 mm.

11. Bande selon une des revendications 1 à 10, caractérisée en ce que les fils (6, 7, 10, 13, 14) cousus dans la bande (1) sont produits d'Aramid, de nylon HT-1 ou d'un matériau similaire.

12. Bande selon une des revendications 9 à 11, caractérisée en ce que la largeur (D) des fins de bande recouvrantes (8, 9) est d'au moins 30 mm.

**FIG. 1**

**FIG. 2**

**FIG. 3**

**FIG. 4**